(19) Europäisches Patentamt
European Patent Office
Office européen des brevets

(11) **EP 1 056 271 B1**

(12) **EUROPEAN PATENT SPECIFICATION**

(45) Date of publication and mention
of the grant of the patent:
**04.10.2006 Bulletin 2006/40**

(51) Int Cl.:
*H04N 1/40* (2006.01)   *H04N 1/23* (2006.01)
*G03B 27/73* (2006.01)

(21) Application number: **00304346.0**

(22) Date of filing: **23.05.2000**

(54) **Image records device**

Bildaufzeichnungsgerät

Dispositif d'enregistrement d'image

(84) Designated Contracting States:
**AT BE CH CY DE DK ES FI FR GB GR IE IT LI LU MC NL PT SE**

(30) Priority: **24.05.1999 JP 14345299**

(43) Date of publication of application:
**29.11.2000 Bulletin 2000/48**

(73) Proprietor: **Futaba Denshi Kogyo Kabushiki Kaisha
Mobara-shi,
Chiba-ken (JP)**

(72) Inventors:
• **Tajima, Koji
Mobari-shi,
Chiba-ken (JP)**
• **Uzawa, Satoshi
Mobari-shi,
Chiba-ken (JP)**
• **Hiraga, Katsuya
Mobari-shi,
Chiba-ken (JP)**
• **Uchiyama, Yawara
Mobari-shi,
Chiba-ken (JP)**
• **Sasomoto, Yuichi
Mobari-shi,
Chiba-ken (JP)**

(74) Representative: **Rees, David Christopher et al
Kilburn & Strode
20 Red Lion Street
London WC1R 4PJ (GB)**

(56) References cited:
**EP-A- 0 599 261          EP-A- 0 788 023
US-A- 3 782 817          US-A- 4 855 760
US-A- 5 212 569**

**Description**

This invention relates to an image record device, and more particularly to an image record device such as an electrophotographic-type printer, a silver salt-type image exposure device or the like which is adapted to form a desired image on a record medium exhibiting photosensitive color-developing characteristics such as a photosensitive film or the like.

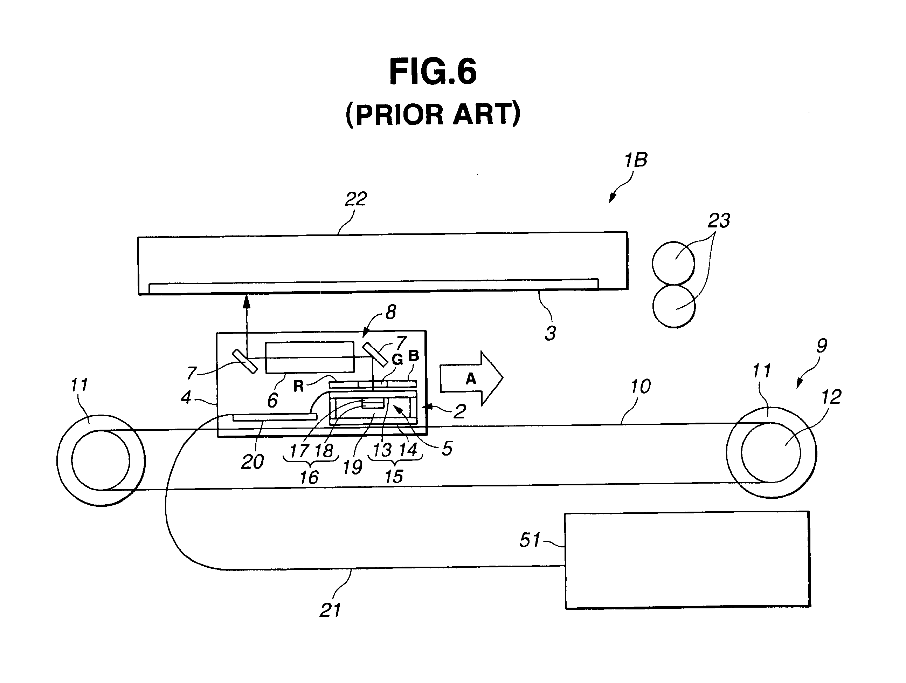

Now, a conventional optical printer which the assignee proposed as an image record device for forming a desired image on a record medium such as a photosensitive film or the like will be described with reference to Fig. 6.

An optical printer generally designated at reference character 1B in Fig. 6 is constructed in such a manner that light emitted from a fluorescent luminous tube 2 constituting a printer head acting as a light source is passed through color filters R, G and B arranged so as to be selectively changed over with respect to the fluorescent luminous tube 2, to thereby provide light of the three primary colors. Then, a color film 3 acting as a record medium is exposed to the light, resulting in a desired full color image being formed thereon.

The optical printer 1B thus constructed may be used as a digital photoprinter which is adapted to output a desired image onto a convenience film or a developing paper acting as a record medium while using a color digital image signal obtained from, for example, a digital camera, a color scanner or the like as an input therefor.

The optical printer 1B includes a printer head module (hereinafter referred to as "head") 4 constructed as shown in Fig. 6. The head 4 is arranged so as to be reciprocated in a sub-scanning direction indicated at an arrow A in Fig. 6 relatively to the color film 3 fixedly set at a predetermined location so as to act as a record medium. The head 4 includes the fluorescent luminous tube 2 acting as a light source, the three color filters R, G and B selectively changed over with respect to the fluorescent luminous tube 2, an equi-magnification image formation lens array 6 provided at a position corresponding to a luminous section 5 of the fluorescent luminous tube 2 and a reflecting mirror 7, which cooperate with each other to constitute a single optical system 8.

The head 4 of the optical printer 1B is reciprocated with respect to the color film 3 in the sub-scanning direction A by a transfer means 9. The transfer means 9 includes a guide means (not shown) for movably guiding the head 4 in the sub-scanning direction A, a pair of pulleys 11 on which a drive belt is wound so as to extend therebetween, a drive motor (stepping motor) 12 for rotating one of the pulleys 11. The drive motor 12 is controlled so as to be driven at a fixed speed by means of an exposure control circuit 51, so that the drive belt 10 may be circulated at a fixed speed, resulting in the head 4 fixed on the drive belt 10 being guided by the guide means, to thereby be moved in the sub-scanning direction A.

The head 4 is mounted thereon with the fluorescent luminous tube 2 constituting the luminous element acting as a light source. The fluorescent luminous tube 2 includes an insulating and light-permeable substrate 13 of a rectangular shape and a casing 14 of a box-like shape sealedly mounted on the substrate 13, to thereby provide an envelope 15 of a substantially rectangular parallelepiped, which is then evacuated at a high vacuum.

The substrate 13 constituting a part of the envelope 15 is formed on an inner surface thereof with a number of luminous dots 16 in a manner to be spaced from each other at predetermined intervals in rows in a longitudinal direction of the substrate 13. The luminous dots 16 constitute a luminous section 5 and each include an anode conductor 17 formed on the substrate 13 and a phosphor layer 18 deposited on the anode conductor 17. A direction in which the luminous dots 16 are arranged is defined to be parallel to a main scanning direction perpendicular to the sub-scanning direction A in which the head 4 is moved. The luminous dots 16 may be arranged in, for example, two rows. The envelope 15 also has a filamentary cathode 19 stretchedly arranged therein so as to extend in the main scanning direction and positioned below the luminous section 5. The filamentary cathode 19 acts as an electron source. The anode conductors 17 of the luminous dots 16 are led out of the envelope 15 independently from each other and connected through a circuit board 20 and a data transfer cable 21 to the exposure control circuit 51, resulting in having a drive signal applied thereto from the circuit 51 independently from each other.

The circuit board 20 is mounted thereon with a luminous dot drive circuit (luminous dot drive means) (not shown) for carrying out on/off control of the luminous dots 16. The luminous dot drive circuit includes an anode driver, which includes a shift register, a latch circuit and a high-voltage power drive circuit, so that image data corresponding in number to the luminous dots 16 may be inputted from the shift register to the anode driver. Then, the data are latched at a timing at which a strobe signal is inputted thereto, so that application of a voltage to the anode conductors (anodes) 17 of the luminous dots 16 corresponding to the input data may be concurrently subject to on/off control.

The head 4 is provided therein with the color filters R, G and B. The color filters R, G and B are arranged in proximity to an outer surface of the substrate 13 of the fluorescent luminous tube 2 in a manner to be movable in the sub-scanning direction A. The color filters R, G and B are positionally changed over depending on a position of the luminous dots 16, so that the color filters R, G and B through which light emitted from the luminous dots 16 permeates may be selectively set as desired.

The structure described above is received in a housing (not shown). The housing is mounted therein with a cartridge 22 in which a plurality of color films 3 each acting as a record medium are received. The color films 3 are discharged outwardly of the housing while being interposed between a pair of development rollers 23 after they are exposed to light.

Formation of a full-color image on the color film 3 by the optical printer 1B constructed as described above is carried out by driving each of the luminous dots 16 of the fluorescent luminous tube 2 depending on image data of an image which has been subject to color separation into the three primary colors and moving the head 4 in the sub-scanning direction A in synchronism with the driving. At this time, the color filter R, G or B of any primary color corresponding to the drive signal is previously set with respect to the luminous dots 16 of the fluorescent luminous tube 2 of the head 4. Such operation is carried out for each of the three primary colors, so that three images which have been thus subject to color separation into the three primary colors are superposedly written on a photosensitive surface of each of the color films 3. More specifically, scanning on the color film 3 is carried out three times while changing over the color filters R, G and B in order, resulting in a full-color image being formed on the color film 3.

Thus, in the conventional optical printer head 1B constructed as described above, the head 4 which includes the fluorescent luminous tube 2 having the luminous dots 16 linearly arranged in the main scanning direction is scanned in the sub-scanning direction A, resulting in the color film 3 being subject to two-dimensional or area exposure.

Also, in the conventional optical printer head 1B, a period of time for which the head 4 is moved by a distance corresponding to one dot of the luminous dots 16 in the sub-scanning direction A is defined to be one unit. Then, a gray scale or gray scale is provided by varying a time ratio between luminescence of each luminous dot 16 and non-luminescence thereof within a period of one unit time or varying a pulse width of the drive signal inputted to each luminous dot 16. Such a time control system realizes stable control increased in linearity as compared with a voltage control system.

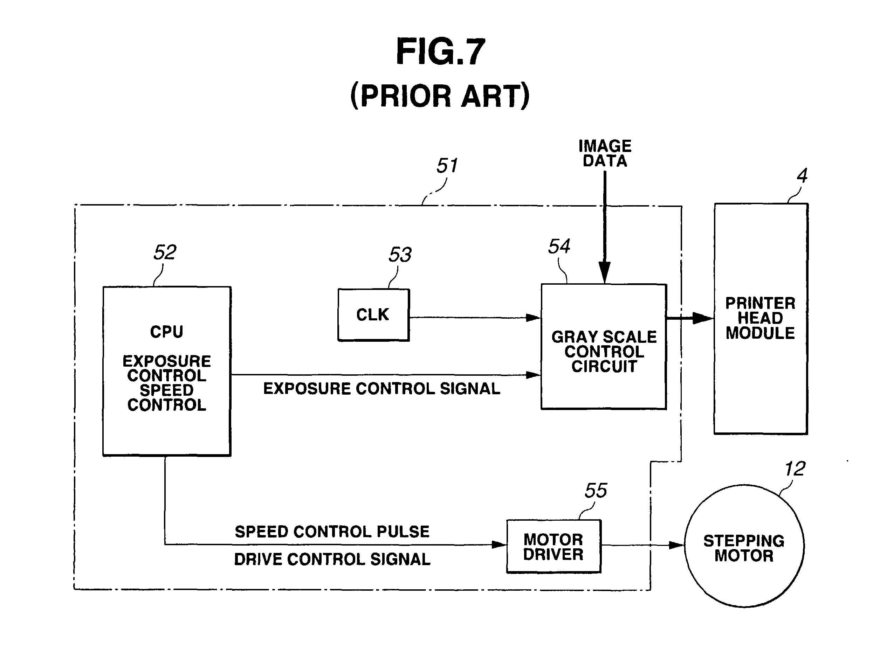

Now, a conventional circuit incorporated in the conventional optical printer 1B and including the exposure circuit 51 will be described with reference to Fig. 7.

The exposure control circuit 51, as shown in Fig. 7, includes a CPU 52, a clock generation circuit (CLK) 53, a gray scale control circuit 54 and a motor driver 55. The CPU 52 supervises exposure control of the luminous dots 16 and speed control of the drive motor 12. The clock generation circuit 53 is constituted by a quartz oscillator of a single frequency and functions to generate a clock signal which is then fed to the gray scale control circuit 54. The gray scale control circuit 54 has an exposure control signal for indicating start/end of exposure inputted thereto from the CPU 52. Also, the gray scale control circuit 54 takes in image data for every line of the luminous dots 16 in synchronism with the clock signal generated from the clock generation circuit 53 and feeds the head 4 with a gray scale control pulse for subjecting the luminous dots 16 to gray scale control depending on the taken-in image data for each line through the anode driver (not shown). The motor driver 55 has a drive control signal for indicating start/stop of the drive motor 12 fed thereto from the CPU 52. Also, the motor driver 55 feeds a drive signal to the drive motor 12 in synchronism with a speed control pulse obtained by dividing an internal clock of the CPU 52, when it is fed with a drive control signal for indicating start of the drive motor 12 from the CPU 52.

In the exposure control circuit 51, when the gray scale control circuit 54 is fed with an exposure control signal for indicating start of exposure from the CPU 52, a clock signal at a predetermined fixed frequency is fed to the gray scale control circuit 54 from the clock generation circuit 53. Then, the gray scale control circuit 54 takes in image data for each line in synchronism with a timing of the clock signal inputted and then outputs a gray scale control pulse for subjecting the luminous dots 16 to gray scale control depending on the taken-in image data for each line to the anode driver (not shown). This results in the anode driver carrying out on/off control of the luminous dots 16 of the head 4 by means of the gray scale control pulse from the gray scale control circuit 54, to thereby carry out exposure control for each of the luminous dots 16. Also, when a drive control signal for indicating start of the drive motor 12 is fed to the motor driver 55, the motor driver 55 outputs a drive signal to the drive motor 12 at a predetermined timing of a dividing signal of an internal clock of the CPU 52, to thereby permit the drive motor 12 to be driven at a fixed speed, resulting in speed control of the drive motor 12 being carried out.

However, in the conventional optical printer 1B having the exposure control circuit 51 incorporated therein, the exposure speed is fixed at a predetermined level during formation of a desired image on the color film 3. Thus, it is required to adjust the exposure energy using any suitable means such as a variation in anode application voltage, gray scale data or the like depending on variation factors in connection with (1) an initial value of luminance of the head 4, (2) sensitivity of a sensitive material for the color film, (3) permeability of the color filters R, G and B and a lens such as, for example, an equi-magnification image formation lens array 6, (4) a change of the fluorescent luminous tube with time and (5) environmental conditions.

In particular, in connection with the sensitivity, a convenience film may be classified into, for example, four types or ISO 100, ISO 600, ISO 800 and ISO 3200 depending on sensitivity of a sensitive material therefor. When the conventional optical printer is to be applied to such record mediums highly different in sensitivity, setting of an exposure speed which ensures application of exposure energy required for full exposure of a record medium lowest in sensitivity causes application of exposure energy to a record medium of the highest sensitivity to be excessive, so that an image obtained is deteriorated in gradation or gray scale. Also, the conventional optical printer causes the number of record mediums treated or processed per unit time to be disadvantageously reduced.

Further, it would be considered that exposure energy is adjusted using any other suitable method such as a variation in anode voltage of each of the luminous dots or the like. Such an approach permits exposure energy to be adjusted within a certain range, however, it substantially fails to permit the optical printer to be operated under optimum conditions because it causes a variation in luminance between the luminous dots.

Thus, the conventional optical printer fails to be successively applied to record mediums or photosensitive films highly different in sensitivity from each other in common. Also, it causes an initial value of luminance to be varied for every head, so that it is required to increase a margin for a processing speed in order to address variable factors such as a reduction in luminance and the like. Unfortunately, this requires to set an initial processing speed at a somewhat low level. Thus, in the prior art, it is highly desirable to develop an optical printer successively applied to color films different in sensitivity in common.

EP-A-788023 shows a photographic image exposing apparatus which includes a white light source, and a filtering device located between the white light source and a photographic paper. The filtering device has colour filters which interrupt a light beam from the source to the paper, whereby light spectrums corresponding to the filters pass through them separately. There is also an adjuster which adjusts the amount of light and acts to change the respective interrupting times of the filters with respect to a predetermined range of exposure.

EP-A-599261 describes a multi-user digital laser imaging system for imaging film from barcoded cartridges as a function of image values representative of the images to be printed. The system includes a memory for storing transfer functions and film models for each of several users.

US-A-3782817 describes a photoprinting machine for printing from transparencies onto paper. The device has photosensitive means for measuring the light transmitted by the transparency. A plurality of filter elements of different spectral transmission characteristics is positioned between the light source and the transparency, and each filter had a diaphragm to control the amount of light transmitted.

US-A-4855760 describes an LED array with graduated quantity control. In this system, the time periods in which current is supplied to LEDs constituting an array are controlled in dependence upon gradation levels, while a constant current is being supplied to the LEDs. The current supply time periods are adjusted at every gradation level corresponding to the variations of light intensity of the LEDs.

The present invention has been made in view of the foregoing disadvantage of the prior art.

Accordingly, it is an object of the present invention to provide an image record device which is capable of ensuring exposure required for a desired image by application of exposure energy depending on a type of a record medium or film, sensitivity thereof or the like.

The present invention attaining this object is defined by independent claim 1. Dependent claims 2-6 define further optional features.

These and other objects and many of the attendant advantages of the present invention will be readily appreciated as the same becomes better understood by reference to the following detailed description when considered in connection with the accompanying drawings; wherein:

Fig. 1 is a schematic view showing an embodiment of an image record device according to the present invention which is constructed in the form of an optical printer;
Fig. 2 is a block diagram showing a circuit including a first example of an exposure control circuit incorporated in the optical printer of Fig. 1;
Fig. 3 is a block diagram showing a circuit including a second example of an exposure control circuit incorporated in the optical printer of Fig. 1;
Fig. 4 is a block diagram showing a circuit including a third example of an exposure control circuit incorporated in the optical printer of Fig. 1;
Fig. 5 is a block diagram showing a circuit including a fourth example of an exposure control circuit incorporated in the optical printer of Fig. 1;
Fig. 6 is a schematic view showing a conventional optical printer; and
Fig. 7 is a block diagram showing a conventional circuit including an exposure control circuit incorporated in the optical printer shown in Fig. 6.

Now, an image record device according to the present invention will be described with reference to the accompanying drawings.

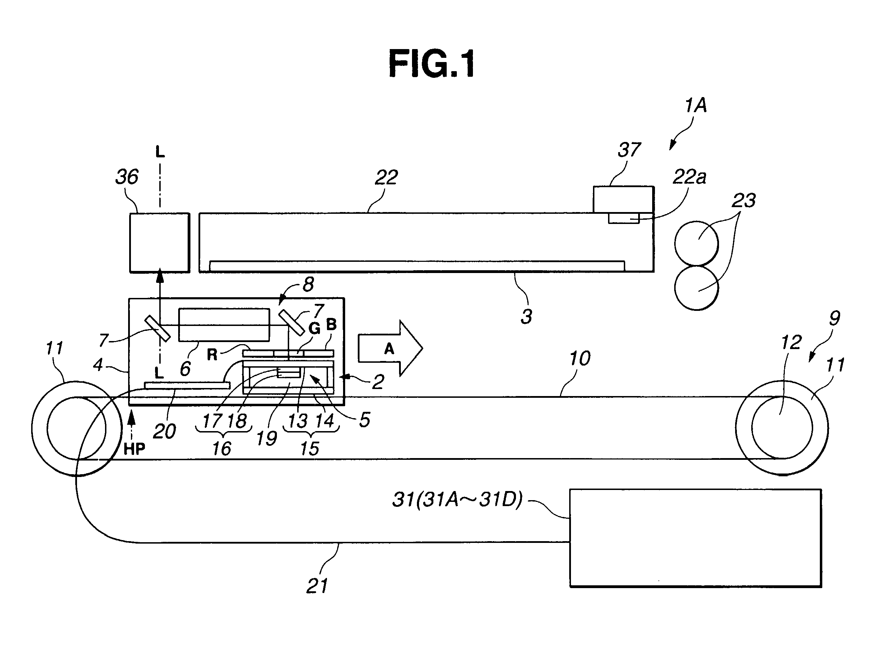

Referring first to Fig. 1, an embodiment of an image record device according to the present invention is illustrated, which is configured in the form of an optical printer. In Fig. 1, reference numerals like those in Fig. 6 designate corresponding parts. An optical printer of the illustrated embodiment generally designated at reference numeral 1A has an exposure control circuit 31 (any one of exposure control circuits 31A to 31D) which will be described in detail hereinafter incorporated therein, so that optimum exposure of a color film 3 acting as a record medium may be ensured depending on a type of the color film and sensitivity thereof irrespective of a transfer speed thereof.

In the optical printer 1A of the illustrated embodiment, when image data inputted thereto include gray scale data of s (s=2 or more) bits, gray scale control is carried out by dividing exposure time (one-line time: $T_L$) per dot into fractions (one-gray scale time: $T_s$) corresponding to 2 to the s-th power ($2^s$) gray scales, to thereby carry out on/off control at a duty ratio depending on the gray scale data.

At this time, relationship between the one-line time $T_L$ (sec) and the one-gray scale time $T_s$ (sec) in the optical printer 1A is $T_s$ = Pitch/(Speed x Scale) because of $T_L$ = Pitch/Speed and $T_s = T_L$/Scale, wherein $T_s$ (sec) is one-line time as described above and Pitch (mm) indicates a line pitch (a pitch width of the luminous dots in the sub-scanning direction), Speed (mm/sec) indicates a sub-scanning speed, $T_s$ (sec) is one-gray scale time as described above, and Scale indicates the number of gray scales.

Also, during a period of one-gray scale time $T_s$, it is required to transfer data for DN dots to the shift register of the anode driver. When the number of clocks required for the transfer is represented by $S_{ck}$, an exposure clock frequency $f_{RCLK}$ is expressed by the following formula (1)

$$f_{RCLK} = S_{ck}/(Pitch/(Speed \text{ x } Scale)) \qquad ... (1)$$

Thus, in the optical printer 1A of the illustrated embodiment, during exposure operation, a drive control signal (pulse signal) depending on the predetermined sub-scanning speed Speed is applied to a drive motor 12 of a transfer means to move a head in a sub-scanning direction A and concurrently the above-described exposure clock frequency $f_{RCLK}$ is inputted to a gray scale control circuit of any one of the exposure control circuit 31A to 31D described hereinafter, so that image data taken in for every line are fed to a luminous dot drive circuit of the head 4, resulting in drive control being carried out. In other words, data in an amount corresponding to the number of luminous dots 16 are transferred during a period of one-gray scale time for luminescence.

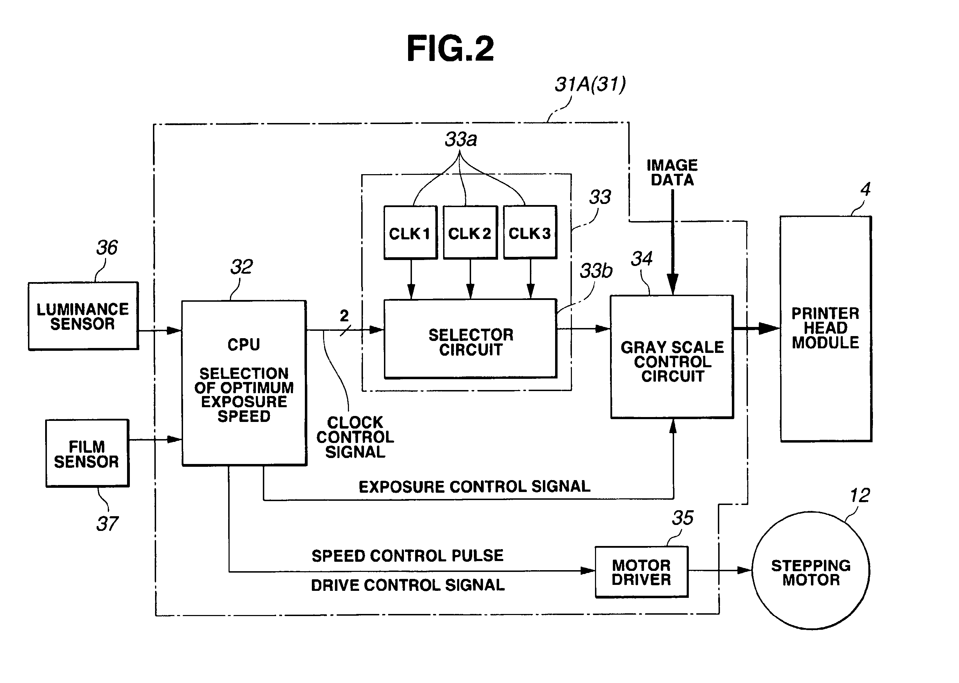

Now, the exposure control circuit (exposure control means) 31 incorporated in the optical printer 1A of the illustrated embodiment will be described with reference to Figs. 2 to 5.

Fig. 2 is a block diagram showing a circuit including a first example of the exposure control circuit 31. An exposure control circuit generally designated at reference numeral 31A in Fig. 2 includes a CPU 32, an exposure clock change-over means 33, a gray scale control circuit 34 and a motor driver 35. The CPU 32 has a detection signal of each of a luminance sensor 36 and a film sensor 37 inputted thereto.

The luminance sensor 36 acting as a luminance detection means may be constituted by, for example, a photomultiplier tube, a charge coupled device (CCD), a semiconductor photosensor or the like. The luminance sensor 36, as shown in Fig. 1, is arranged in a housing so that a detection surface thereof is positioned on an optical path (an optical axis L-L in Fig. 1) of light emitted from the head 4 in a manner to be perpendicular to the optical path (or normal to the sheet of Fig. 1), when a left side end of the head 4 is kept positioned at a home position (an initial position before start of exposure) HP out of an exposure position of the color film 3. The luminance sensor 36 functions to detect at least a part of luminance of the luminous dots 4 of the head 4 to generate a detection signal (luminance information) when the head 4 is kept positioned at the home position HP. Then, the detection signal is fed to the CPU 32.

The film sensor 37 acting as a medium detection means detects a cutout 22a of a cartridge 22 in which a plurality of color films 3 are received to generate a detection signal (medium information) and outputs the detection signal to the CPU 32. The cutout 22a of the cartridge 22 is previously specially formed depending on a type of the color film 3 and/or sensitivity thereof.

The CPU 32 acting as a control means supervises exposure control of the luminous dots 16 and speed control of the drive motor 12 to ensure optimum exposure of the color film 3 depending on a type of the color film 3 and/or sensitivity thereof irrespective of a transfer speed of the color film 3 on the basis of a detection signal from each of the luminance sensor 36 and film sensor 37.

More specifically, the CPU 32 operates an optimum exposure speed based on the detection signals from the luminous sensor 36 and film sensor 37 to output a speed control pulse depending on the thus-operated exposure speed to the motor driver 35.

In this instance, data on the exposure speed based on relationship between a type of the color film (record medium) 3 and/or sensitivity thereof and intensity of light emitted from the luminous dots 16 may be previously stored in the form of a table in a storage means such as a ROM, a RAM or the like, so that the CPU 32 may read data on the optimum exposure speed out of the storage means depending on the detection signals from the luminance sensor 36 and film sensor 37.

Also, the CPU 32 outputs a clock control signal for selecting an exposure clock corresponding to the exposure speed to the exposure clock change-over means 33. Further, the CPU 32 outputs an exposure control signal for indicating start/stop of the exposure to the gray scale control circuit 34.

The exposure clock change-over means 33 includes a clock generation circuit 33a and a selector circuit 33b.

In Fig. 2, the clock generation circuit 33a is constituted by three quartz oscillators CLK1, CLK2 and CLK3 which generate clock signals different in frequency from each other, respectively.

The selector circuit 33b may be constituted by, for example, a multiplexer including a plurality of channels and is connected through a two-bit control signal line to the CPU 32. In Fig. 2, the selector circuit 33b is constructed so as to select any one of clock signals of three kinds of frequencies, resulting in the selected clock signal being fed in the form of an exposure clock to the gray scale control circuit 34.

The exposure clock change-over means 33 shown in Fig. 2 is constructed so as to select one of outputs of the three quartz oscillators CLK1, CLK2 and CLK3 by means of two bits of the control signal line, to thereby permit three kinds of exposure clocks to be selected. Alternatively, it may be constructed so as to permit two or more kinds of exposure clocks to be selected as desired.

For example, in Fig. 2, it is considered that a ½ frequency divider is connected to a rear stage of the selector circuit 33b. In this instance, the selector circuit 33b and CPU 32 are connected to each other through a three-bit control signal line, so that one of outputs of the three quartz oscillators CLK1, CLK2 and CLK3 may be selected by lower two bits of a clock control signal fed thereto from the CPU 32 and whether the remaining outputs pass through the ½ frequency divider or pass may be determined by means of an upper one bit thereof. Such construction permits six kinds of exposure clocks to be selected.

The gray scale control circuit (gray scale control means) 34 has an exposure control signal for indicating start/stop of the exposure fed thereto from the CPU 32. When the gray scale control circuit 34 is fed with an exposure control signal for indicating start of the exposure from the CPU 32, a signal synchronized with the exposure clock generated from the selector circuit which is a dividing signal depending on a predetermined dividing ratio permits image data for one line of the luminous dots 16 to be taken in by an internal buffer circuit of the FIFO type. The gray scale control circuit 34 outputs a gray scale control pulse (on/off signal) for gray scale control of the luminous dots 16 to the anode driver (not shown) depending on the image data for one line of the luminous dots taken in by the buffer circuit and at a timing of the signal synchronized with the exposure clock.

The motor driver 35 acting as a motor drive means is fed with a drive control signal for indicating start/stop of the drive motor 12 from the CPU 32. When a drive control signal for indicating start of the drive motor 12 is fed to the motor driver 35 from the CPU 32, the motor driver 35 feeds the drive motor 12 with the drive signal at a timing of a speed control pulse depending on an exposure speed.

Now, the manner of operation of the optical printer 1A having the thus-constructed exposure control circuit 31A incorporated therein will be described.

When the optical printer 1A is turned on, the head 4 is moved to the home position HP shown in Fig. 1. Then, the luminous dots 16 of the head 4 are driven for luminescence by means of energy at a predetermined level. Luminance of the luminous dots 16 thus driven is detected by the luminance sensor 36 and subject to digital conversion, to thereby provide a detection signal, which is then fed to the CPU 32. The CPU 32 measures luminance of the luminous dots 16 based on the detection signal thus fed from the luminous sensor 36.

In parallel to detection of the luminance of the luminous dots 16, the film sensor 37 detects the cutout 22a formed at the cartridge 22, to thereby output a detection signal. The detection signal is subject to digital conversion and then fed to the CPU 32. The CPU judges or discriminates a type of the color film 3 and/or sensitivity thereof based on the detection signal thus fed thereto from the film sensor 37.

Such discrimination of the type and/or sensitivity of the color film 3 permits data on optimum exposure energy with respect to the color film 3 to be specified. Then, the CPU 32 operates an optimum exposure speed from luminous energy measured on the basis of the detection signal fed from the luminous sensor 36.

Then, the CPU 32 feeds a drive control signal for indicating start of the drive motor 12 to the motor driver 35 according to the thus-operated exposure speed and at a timing of a speed control pulse generated by a signal obtained by dividing the internal clock. Also, the CPU 32 feeds a clock control signal corresponding to the exposure speed to the selector circuit 33b. At this time, the clock signal is selected so that the above-described relationship expressed by the formula (1) may be established between the exposure clock and the exposure speed.

Then, when any one of the clock signals CLK1 to CLK3 is selected by the selector circuit 33b, the clock signal selected is fed in the form of an exposure clock to the gray scale control circuit 34. The gray scale control circuit 34 takes in image data for one line of the luminous dots 16 in order by means of a dividing signal (at a predetermined dividing ratio) synchronized with the exposure clock and outputs a gray scale control pulse the anode driver at a timing of the dividing signal fed from the selector circuit 33b. This permits the anode driver to carry out on/off control of the luminous dots 16 of the head 4 by means of the gray scale control pulse fed thereto from the gray scale control circuit 34, to thereby carry out exposure control for each of the luminous dot 16.

Thus, the optical printer 1A having the exposure control circuit 31A incorporated therein is so constructed that a drive timing of the luminous dots 16 is controlled for every line depending on the sub-scanning speed of the head 4. This results in an image of an appropriate size being formed on the color film 3 irrespective of a transfer speed of the head 4.

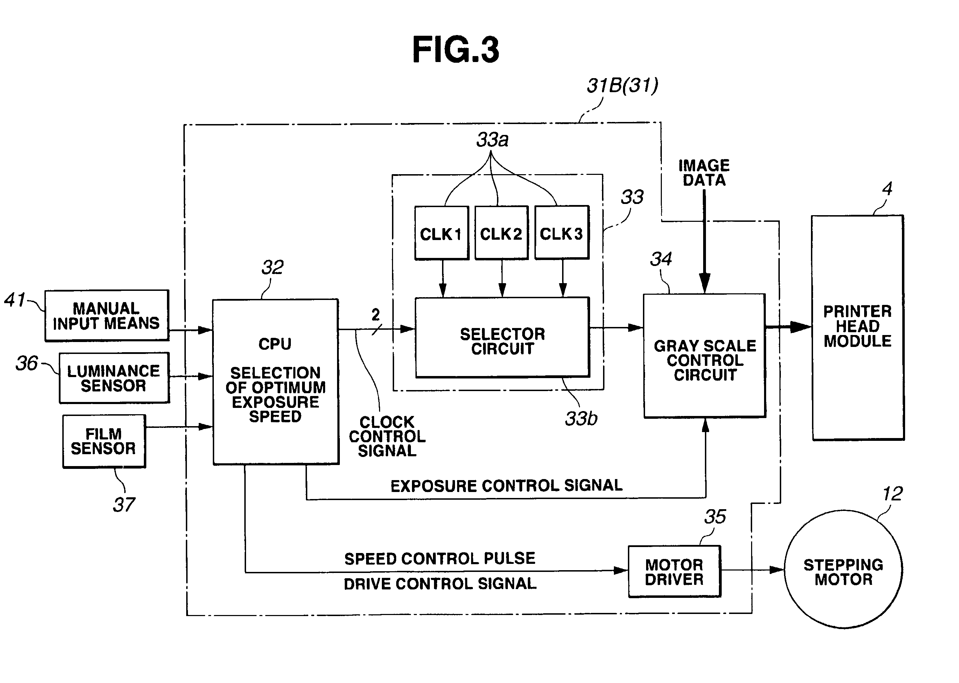

Referring now to Fig. 3, another example of the exposure control circuit 31 is illustrated. An exposure control circuit generally designate at reference numeral 31B in Fig. 3 includes a manual input means 41 connected to a CPU 32 and is constructed so as to be different in a configuration for selecting an exposure clock and operation thereof from the exposure control circuit 31A described above.

The manual input means 41 functions to input an exposure speed to the CPU 32. The manual input means 41 may be constituted by an external input device such as, for example, a switch, a keyboard or the like, so that an exposure speed signal which has been subject to digital conversion is fed to the CPU 32 from the manual input means 41. When the CPU 32 is fed with an exposure speed signal from the manual input means 41, it operates an exposure clock based on the exposure speed signal to output a clock control signal to a selector circuit 33b, resulting in one of clock signals CLK1 to CLK3 which corresponds to the thus-operated exposure clock being selected. The remaining part of the exposure control circuit 31B may be constructed in substantially the same manner as the exposure control circuit 31A.

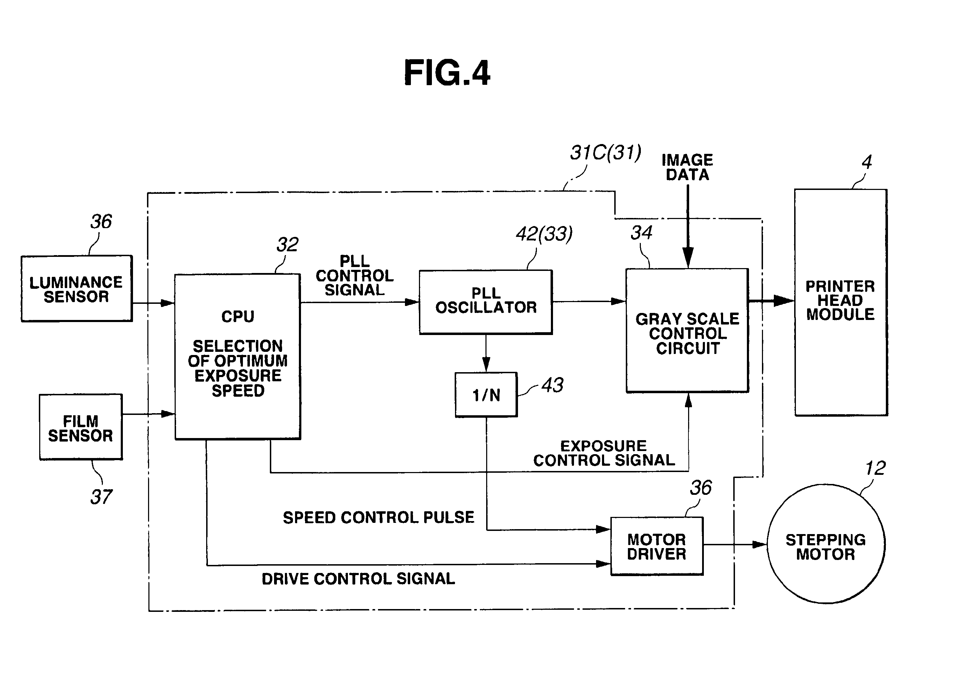

Referring now to Fig. 4, a further example of the exposure control circuit 31 is illustrated. An exposure control circuit generally designated at reference numeral 31C in Fig. 4 includes an exposure clock change-over means 33 constituted by a PLL oscillator 42, so that feeding of a PLL control signal for setting a dividing ratio of the PLL oscillator 42 to a CPU 32 permits more fine adjustment of a frequency. For this purpose, the CPU 32 operates an optimum exposure speed based on a detection signal fed from each of a luminance sensor 36 and a film sensor 37 and calculates a dividing ratio depending on the thus-operated exposure speed to feed the PLL control signal to the PLL oscillator 42. An exposure clock which is an output of the PLL oscillator 42 is fed to a gray scale control circuit 34 and fed in the form of a speed control pulse to a motor driver 35 through a 1/N frequency divider 43. This permits the exposure clock and a feed speed of the head to be synchronized with each other. The remaining part of the exposure control circuit 31C may be constructed in substantially the same manner as the exposure control circuit 31A described above with reference to Fig. 2.

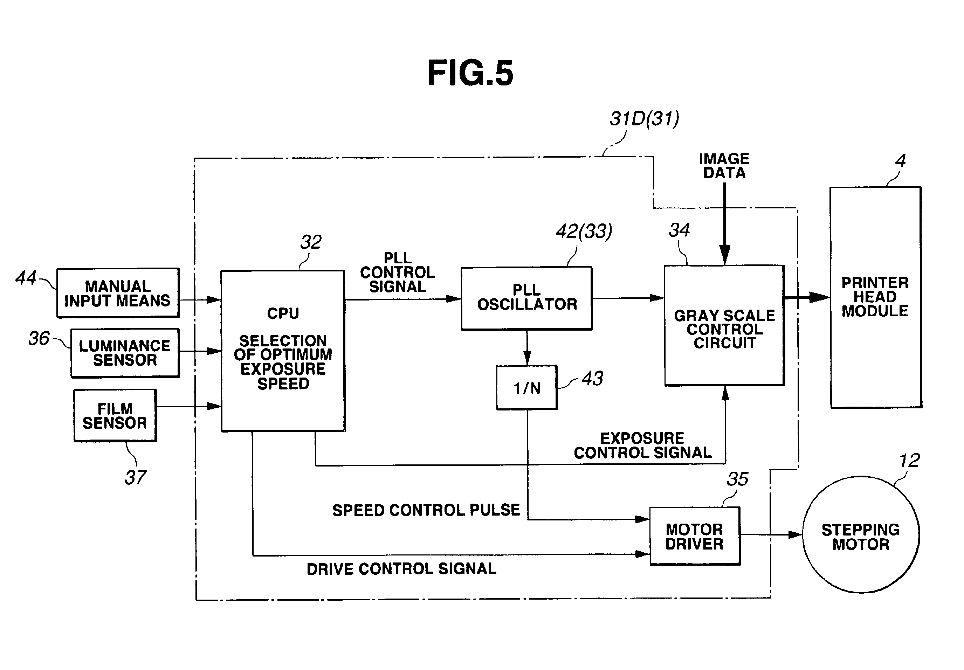

Referring now to Fig. 5, still another example of the exposure control circuit 31 is illustrated. An exposure control circuit generally designated at reference numeral 31D in Fig. 5 is a modification of the exposure control circuit 31C described above with reference to Fig. 4. The exposure control circuit 31D includes a manual input means 44 connected to a CPU 32.

The manual input means 44 functions to set an exposure speed and input it to the CPU 32. The manual input means 41 may be constituted by an external input device such as, for example, a switch, a keyboard or the like, so that exposure speed information is fed to the CPU 32 from the manual input means 41. Also, data on an exposure clock with respect to each of various exposure speeds and a dividing ratio thereof are stored in a storage means such as, for example, a ROM, a RAM or the like. When the CPU 32 is fed with exposure speed information from the manual input means 44, it outputs a PLL control signal for setting a dividing ratio of a PLL oscillator 42 corresponding to the exposure speed information to the PLL oscillator 42. This permits the exposure clock at the above-described dividing ratio to be fed to a gray scale control circuit 34 from the PLL oscillator 42.

The exposure clock which is an output of the PLL oscillator 42 is fed to the gray scale control circuit 34 and fed in the form of a speed control pulse to a motor driver 35 through a 1/N frequency divider 43 as in the exposure control circuit 31C described above, so that the exposure clock and a feed speed of the head 4 may be synchronized with each other.

Thus, the optical printer 1A which has the exposure control circuit 31 or any one of the exposure control circuits 31A to 31D incorporated therein permits each of the luminous dots 16 to be driven by means of optimum exposure energy.

In particular, the optical printer 1A effectively detects luminance of the luminous dots 16, a type of the color film 3 and sensitivity thereof which are a part of variable factors of various conditions, resulting in providing an appropriate measure such as a reduction in exposure speed when exposure energy is insufficient in view of sensitivity of the color film 3. This permits exposure of the color film 3 to be carried out at an optimum exposure speed in view of print conditions therefor.

Thus, the optical printer 1A of the illustrated embodiment exhibits advantages such as an increase in processing speed of a record medium increased in sensitivity, an improvement in quality of an image due to optimization of exposure conditions, widening of tolerance of a variation in initial value of luminance of the luminous dots, expansion of a scope of application of sensitivity of the record medium, widening of tolerance of permeability of the color filters and lens, an increase in durability of the luminous dots, expansion of a scope of application of environmental conditions and the like.

The optical printer of the illustrated embodiment which has the exposure control circuit 31 incorporated therein is not limited to such construction as shown in Fig. 1. For example, an organic electroluminescent device or the like may be substituted for the fluorescent luminous tube 2 acting as a light source. Also, arrangement of the luminous dots 16 is not limited to any specific manner such as an offset manner so long as it covers a region of the color film 3 for one line in the main scanning direction. For example, the luminous dots 16 may be arranged in any other desired manner such as, for example, a manner of arranging the luminous dots in a row in the main scanning direction or a manner of arranging them in two rows parallel to each other in the main scanning direction. Further, the record medium is not limited to the color film 3. Any suitable medium such as a developing paper or the like may be used as the record medium so long as it permits optical writing of an image thereon.

Also, the optical printer of the illustrated embodiment is so constructed that the head 4 is reciprocated in the sub-scanning direction A with respect to the record medium or color film 3 fixedly positioned at a predetermined location to subject the record medium to two-dimensional or area exposure. Alternatively, the head 4 may be fixedly positioned at a predetermined location and the record medium may be moved in the sub-scanning direction A with respect to the head 4. In this instance, control of a transfer speed by the exposure control circuit 31 is carried out the record medium.

As can be seen from the foregoing, the image record device of the present invention permits the luminous dots to be driven by means of optimum exposure energy. In particular, the image record device of the present invention detects luminance of the luminous dots, a type of the color film and sensitivity thereof which are a part of variable factors, resulting in providing an appropriate measure such as a reduction in exposure speed when exposure energy is insufficient in view of sensitivity of the color film used. This permits exposure of the color film to be carried out at an optimum exposure speed in view of print conditions therefor. Thus, the optical printer of the present invention exhibits advantages such as an increase in processing speed of a record medium increased in sensitivity, an improvement in quality of an image due to optimization of exposure conditions, expansion of a scope of application of sensitivity of the record medium, and an increase in durability of the luminous dots.

**Claims**

1. An image record device suitable for use with record media of different sensitivities supplied in respective cartridges comprising:

   a head (4) including a plurality of luminous dots (16);
   transfer means (9,12) for moving the head (4) and a record medium (3) relatively to each other at a relative transfer speed;
   drive means for carrying out on/off control of the luminous dots (16) to produce luminescence;
   the head (4) subjecting the record medium (3) to area exposure, resulting in a desired image being formed on the record medium (3);
   luminance detection means (36) for detecting luminance of the plurality of luminous dots (16) when driven to produce luminescence and for generating a luminance information detection signal;
   medium detection means (37) for detecting information carried by the cartridge about the sensitivity of the record medium (3) and for generating a sensitivity signal representing the detected sensitivity; and
   control means (31) arranged to receive the luminance information detection signal and sensitivity signal and to control the luminescence of the luminous dots (16) in dependence upon luminance information detected by the luminance detection means (36) and sensitivity information detected by the medium detection means (37),
   the control means also controlling the relative transfer speed between the head (4) and the record medium (3) such that the luminescence of the luminous dots is suitable for the record medium (3).

2. An image record device as claimed in Claim 1, **characterised in that** the control means (31) includes speed selection means (32) which selects an exposure speed based on the luminance information detected and the sensitivity information detected on the record medium (3), and generates a corresponding speed control pulse to produce a control signal for selecting an exposure clock (33a) corresponding to the exposure speed; the device also comprising: exposure clock selection means (33b) for selectivity directing the control signal fed thereto from the speed selection means (32) into an exposure clock (33a) corresponding to the control signal; a gray scale control means (34) arranged to take in image data for one line of the luminous dots (16) at a predetermined timing of a dividing signal synchronized with the exposure clock (33a) selected by the exposure clock selection means (33b), the grey scale control means (34) also being arranged to output a gray scale control pulse for subjecting each of the luminous dots (16) to gray scale control, depending on the image data taken in for one line at the predetermined timing of the proportional signal synchronized with the exposure clock (33a) selected by the exposure clock selection means (33b); the transfer means (9,12) being arranged to move the head (4) and record medium (3) relatively to each other at a timing determined by a speed control pulse fed thereto from the speed selection means (32).

3. An image record device as claimed in Claim 2, **characterised in that** the exposure clock selection means (33) includes a clock generation circuit constituted by a plurality of oscillators for generating clock signals which are different in frequency and a selector circuit (33b) for selecting one of the oscillators of the clock generation circuit which generates a clock signal corresponding to a control signal fed thereto from the speed selection means (32).

4. An image record device as claimed in Claim 2, **characterised in that** the speed selection means (32) generates a control signal for setting a dividing ratio corresponding to the exposure speed; and the exposure clock selection means (33) includes a PLL oscillator (41) for generating an exposure clock at a dividing ratio set by the control signal from the speed selection means (32); whereby the signal obtained by determining the output of the PLL oscillator (42) at a predetermined dividing ratio is fed in the form of the speed control pulse to the drive means (9,12).

5. An image record device as claimed in Claim 1 or Claim 2, **characterised by** a storage means in which exposure speed data based on the relationship between the sensitivity of the record medium and the intensity of the optical output of the luminous dots are stored; whereby the exposure speed data are read out of the storage means based on the luminance information detected by the luminance detection means (36) and the sensitivity information detected by the medium detection means (37), so that the relative transfer speed between the head (4) and the record medium (3) may be controlled, depending on the exposure speed data thus read.

6. An image record device as claimed in any preceding Claim, **characterised by** manual input means (41) for correcting the sensitivity of the record medium detected by the medium detection means (37).

**Patentansprüche**

1. Bildaufzeichnungsgerät, welches zur Benutzung mit Aufzeichnungsmedien unterschiedlicher Empfindlichkeiten geeignet ist, die in jeweiligen Kassetten zur Verfügung gestellt werden, umfassend:

einen Kopf (4), der eine Vielzahl von Leuchtpunkten (16) enthält;
Transfermittel (9,12), um den Kopf (4) und ein Aufzeichnungsmedium (3) relativ zueinander mit einer relativen Transfergeschwindigkeit zu bewegen;
Ansteuerungsmittel, zum Durchführen von Ein- /Aus-Steuerung der Leuchtpunkte (16), um Lumineszenz zu erzeugen;
wobei der Kopf (4) das Aufzeichnungsmedium (3) einer Flächenbelichtung unterwirft, welche bewirkt, dass das gewünschte Bild auf dem Aufzeichnungsmedium (3) gebildet wird;
Helligkeitserfassungsmittel (36) zum Erfassen der Helligkeit der Vielzahl der Leuchtpunkte (16), wenn diese angesteuert werden, um Lumineszenz zu erzeugen, und zum Erzeugen eines Helligkeitsinformationserfassungssignals;
Mediumerfassungsmittel (37) zum Erfassen von Informationen, die von der Kassette getragen werden, über die Empfindlichkeit des Aufzeichnungsmediums (3), und zum Erzeugen eines Empfindlichkeitssignals, welches die erfasste Empfindlichkeit repräsentiert;
Steuermittel (31), welche angeordnet sind, um das Helligkeitsinformationserfassungssignal und das Empfindlichkeitssignal zu empfangen und die Helligkeit der Leuchtpunkte (16) in Abhängigkeit der Helligkeitsinformation, die von dem Helligkeitserfassungsmittel (36) erfasst worden ist, und der Empfindlichkeitsinformation, die von dem Mediumerfassungsmittel (37) erfasst worden ist, zu steuern,
wobei die Steuermittel auch die relative Transfergeschwindigkeit zwischen dem Kopf (4) und dem Aufzeichnungsmedium (3) so steuern, dass die Helligkeit der Leuchtpunkte für das Aufzeichnungsmedium (3) geeignet ist.

2. Bildaufzeichnungsgerät nach Anspruch 1, **dadurch gekennzeichnet, dass** die Steuermittel (31) ein Geschindigkeitswahlmittel (32) enthalten, welches eine Belichtungsgeschwindigkeit, auf der Basis der erfassten Helligkeitsinformation und der auf dem Aufzeichnungsmedium (3) erfassten Empfindlichkeitsinformation auswählt, und einen zugehörigen Geschwindigkeitssteuerimpuls erzeugt, um ein Steuersignal zum Auswählen einer Belichtungsuhr (33a), die der Belichtungsgeschwindigkeit entspricht, zu erzeugen; wobei das Gerät auch umfasst: Belichtungsuhrauswahlmittel (33b), um das von dem Geschwindigkeitsauswahlmittel (32) dahin zugeführte Steuersignal selektiv dem Steuersignal entsprechend in eine Belichtungsuhr (33a) zu leiten; ein Grauskalasteuermittel (34), welches eingerichtet ist, um Bilddaten für eine Linie aus Leuchtpunkten (16) zu einem vorgegebenen Zeitpunkt eines Teilungssignals, welches mit der Belichtungsuhr (33a), die von dem Belichtungsuhrauswahlmittel (33b) ausgewählt worden ist, synchronisiert ist, aufzunehmen, wobei das Grauskalasteuermittel (34) auch eingerichtet ist, um einen Grauskalasteuerimpuls auszugeben, um jeden der Leuchtpunkte (16) einer Grauskalasteuerung zu unterwerfen, in Abhängigkeit von den Bildinformationen, welche für eine Zeile zu dem vorgegebenen Zeitpunkt des proportionalen Signals, welches mit der Belichtungsuhr (33a), die von dem Belichtungsuhrauswahlmittel (33b) ausgewählt worden ist, synchronisiert ist, aufgenommen worden sind; wobei die Transfermittel (9,12) eingerichtet sind, um den Kopf (4) und das Aufzeichnungsmedium (3) relativ zueinander mit einem Takt zu bewegen, der durch einen Geschwindigkeitssteuerimpuls bestimmt wird, der von dem Geschwindigkeitsauswahlmittel (32) dort hingeführt wird.

3. Bildaufzeichnungsgerät nach Anspruch 2, **dadurch gekennzeichnet, dass** die Belichtungsuhrauswahlmitel (33) einen Takterzeugungsschaltkreis, der aus einer Vielzahl von Oszillatoren besteht, um Taktsignale zu erzeugen, die sich in der Frequenz unterscheiden und einem Auswahlschaltkreis (33b) beinhalten, zum Auswählen eines der Oszillatoren des Taktgeneratorschaltkreises, der ein Taktsignal erzeugt, das einem Steuersignal entspricht, das von dem Geschwindigkeitsauswahlmittel (32) dorthin zugeführt wird.

4. Bildaufzeichnungsgerät nach Anspruch 2, **dadurch gekennzeichnet, dass** das Geschwindigkeitsauswahlmittel (32) ein Steuersignal erzeugt, zum Setzen eines Teilungsverhältnises, das der Belichtungsgeschwindigkeit entspricht; und wobei das Belichtungstaktauswahlmittei (33) einen PLL-Oszillator (41) beinhaltet, zum Erzeugen eines Belichtungstaktes mit einer Teilungsrate, die durch das Steuersignal von dem Geschwindigkeitsauswahlmittel (32) gesetzt wird; wobei das Signal, welches durch die Bestimmung der Ausgabe des PLL Oszillators (42) bei einem vorgegebenen Teilungsverhältnis bestimmt wird, in Form eines Geschwindigkeitssteuerimpulses an die Antriebsmittel (9,12) geführt wird.

5. Bildaufzeichnungsgerät nach Anspruch 1 oder Anspruch 2, **gekennzeichnet durch** ein Speichermittel in dem Belichtungsgeschwindigkeitsdaten auf der Basis des Verhältnisses zwischen der Empfindlichkeit des Aufzeichnungsmediums und der Intensität der optischen Ausgabe der Leuchtpunkte gespeichert werden; wobei die Belichtungsgeschwindigkeitsdaten aus dem Speichermittel ausgelesen werden auf der Basis der Helligkeitsinformation, die von dem Helligkeitserfassungsmittel (36) erfasst worden ist, und der Empfindlichkeitsinformation, die von dem Mediumerfassungsmittel (37) erfasst worden ist, so dass die relative Transfergeschwindigkeit zwischen dem Kopf (4) und den Aufzeichnungsmedium (3) in Abhängigkeit der so gelesenen Belichtungsgeschwindigkeit gesteuert werden kann.

6. Bildaufzeichnnungsgerät nach einem der vorangehenden Ansprüche, **gekennzeichnet durch** manuelle Eingabemittel (41), zum Korrigieren der Empfindlichkeit des Aufzeichnungsmediums, die von dem Mediumerfassungsmittel (37) erfasst worden ist.

## Revendications

1. Dispositif d'enregistrement d'image pour utilisation avec des supports d'enregistrement de différentes sensibilités fournis dans des cartouches respectives comprenant :

   une tête (4) dotée d'une pluralité de points lumineux (16) ;
   un moyen de transfert (9,12) pour déplacer la tête (4) et un support d'impression (3) relativement l'un par rapport à l'autre à une vitesse de transfert relative ;
   un moyen d'entraînement pour réaliser la commande marche/arrêt des points lumineux (16) afin de produire la luminescence ;
   la tête (4) exposant le support d'enregistrement (3) à l'exposition de zone, pour former une image souhaitée sur le support d'enregistrement (3) ;
   des moyens de détection de luminance (36) pour détecter la luminance de la pluralité de points lumineux (16) une fois entraînés pour produire la luminescence et pour générer un signal de détection des informations de luminance :
   un moyen de détection de support (37) pour détecter les informations portées par la cartouche sur la sensibilité du support d'enregistrement (3) et pour générer un signal de sensibilité représentant la sensibilité détectée ; et
   un moyen de commande (31) agencé pour recevoir le signal de détection des informations de luminance et le signal de sensibilité et pour commander la luminescence des points lumineux (16) dépendant des informations de luminance détectées par le moyen de détection de luminance (36) et les informations de sensibilité détectées par le moyen de détection de support (37),
   le moyen de commande régule également la vitesse de transfert relative entre la tête (4) et le support d'enregistrement (3) de sorte que la luminescence des points lumineux soit appropriée pour le support d'impression (3).

2. Dispositif d'enregistrement d'image selon la revendication 1, **caractérisé en ce que** le moyen de commande (31) comprend un moyen de sélection de vitesse (32) qui sélectionne une vitesse d'exposition sur la base des informations de luminance détectées et des informations de sensibilité détectées sur le support d'enregistrement (3), et génère une impulsion de régulation de vitesse correspondante pour produire un signal de commande afin de sélectionner une horloge d'exposition (33a) correspondant à la vitesse d'exposition ; le dispositif comprenant également : un moyen de sélection d'horloge d'exposition (33b) pour diriger sélectivement le signal de commande amené à celui-ci depuis le moyen de sélection de vitesse (32) dans une horloge d'exposition (33a) correspondant au signal de commande ; un moyen de commande de la gamme de gris (34) agencé pour prendre des données image pour une ligne des points lumineux (16) à une synchronisation prédéterminée d'un signal de division synchronisé avec l'horloge d'exposition (33a) sélectionnée par le moyen de sélection d'horloge d'exposition (33b), le moyen de commande de gamme de gris (34) étant également agencé pour émettre une impulsion de commande de gamme de gris pour soumettre chacun des points lumineux (16) à la commande de gamme de gris, en fonction des données image prises pour une ligne à la synchronisation prédéterminée du signal proportionnel synchronisé avec l'horloge d'exposition (33a) sélectionnée par les moyens de sélection de l'horloge d'exposition (33b) ; les moyens de transfert (9, 12) étant agencés pour déplacer la tête (4) et le support d'impression (3) relativement l'un par rapport à une synchronisation déterminée par une impulsion de régulation de vitesse amenée à celui-ci depuis le moyen de sélection de vitesse (32).

3. Dispositif d'enregistrement d'image selon la revendication 2, **caractérisé en ce que** le moyen de sélection d'horloge d'exposition (33) comprend un circuit de génération d'horloge constitué par une pluralité d'oscillateurs pour générer des signaux d'horloge de fréquence différente ainsi qu'un circuit de sélection (33b) pour sélectionner un des oscillateurs du circuit de génération d'horloge qui génère un signal d'horloge correspondant à un signal de commande amené à celui-ci depuis le moyen de sélection de vitesse (32)

4. Dispositif d'enregistrement d'image selon la revendication 2, **caractérisé en ce que** le moyen de sélection de vitesse (32) génère un signal de commande pour définir un taux de division correspondant à la vitesse d'exposition ; et le moyen de sélection d'horloge d'exposition (33) comprend un oscillateur à boucle à verrouillage de phase (41) pour générer une horloge d'exposition à un taux de division fixé par le signal de commande depuis les moyens de sélection de vitesse (32) ; moyennant quoi le signal obtenu en déterminant la sortie de l'oscillateur à boucle à verrouillage de phase (42) à un taux de division prédéterminé est amené sous la forme d'une impulsion de commande de vitesse aux moyens d'entraînement (9,12).

5. Dispositif d'enregistrement d'image selon la revendication 1 ou 2, **caractérisé par** un moyen de stockage dans lequel les données de vitesse d'exposition basées sur le rapport entre la sensibilité du support d'enregistrement et l'intensité de la sortie optique des points lumineux sont stockés ; les données de vitesse d'exposition étant lues du moyen de stockage sur la base des informations de luminance détectées par les moyens de détection de luminance (36) et les informations de sensibilité détectées par le moyen de détection de support (37), de sorte que la vitesse de transfert relative entre la tête (4) et le support d'enregistrement (3) puissent être régulée, en fonction des données de vitesse d'exposition ainsi lues.

6. Dispositif d'enregistrement d'image selon l'une quelconque des revendications précédentes **caractérisé par** un moyen d'entrée manuel (41) pour corriger la sensibilité du support d'impression détecté par le moyen de détection de support (37).

# FIG.1

# FIG.2

**31A(31)**

**33a**

IMAGE DATA

**33**

| CLK1 | CLK2 | CLK3 |

**36**
LUMINANCE SENSOR

**32**
CPU

SELECTION OF OPTIMUM EXPOSURE SPEED

**2**

CLOCK CONTROL SIGNAL

**33b**

SELECTOR CIRCUIT

**34**

GRAY SCALE CONTROL CIRCUIT

**4**

PRINTER HEAD MODULE

**37**
FILM SENSOR

EXPOSURE CONTROL SIGNAL

SPEED CONTROL PULSE

DRIVE CONTROL SIGNAL

**35**
MOTOR DRIVER

**12**
STEPPING MOTOR

EP 1 056 271 B1

# FIG.3

Figure elements:

- 31B(31)
- 33a: CLK1, CLK2, CLK3 (33)
- 33b
- 41: MANUAL INPUT MEANS
- 36: LUMINANCE SENSOR
- 37: FILM SENSOR
- 32: CPU — SELECTION OF OPTIMUM EXPOSURE SPEED
- 2: CLOCK CONTROL SIGNAL
- SELECTOR CIRCUIT
- IMAGE DATA
- 34: GRAY SCALE CONTROL CIRCUIT
- 4: PRINTER HEAD MODULE
- EXPOSURE CONTROL SIGNAL
- 35: MOTOR DRIVER
- SPEED CONTROL PULSE
- DRIVE CONTROL SIGNAL
- 12: STEPPING MOTOR

# FIG.4

LUMINANCE SENSOR *36*

FILM SENSOR *37*

CPU *32*
SELECTION OF OPTIMUM EXPOSURE SPEED

PLL CONTROL SIGNAL

PLL OSCILLATOR *42(33)*

1/N *43*

*31C(31)*

IMAGE DATA

GRAY SCALE CONTROL CIRCUIT *34*

PRINTER HEAD MODULE *4*

EXPOSURE CONTROL SIGNAL

SPEED CONTROL PULSE

MOTOR DRIVER *36*

STEPPING MOTOR *12*

DRIVE CONTROL SIGNAL

EP 1 056 271 B1

# FIG.5

# FIG.6
## (PRIOR ART)

EP 1 056 271 B1

# FIG.7
## (PRIOR ART)

IMAGE DATA

51

52

CPU

EXPOSURE CONTROL SPEED CONTROL

53

CLK

54

GRAY SCALE CONTROL CIRCUIT

4

PRINTER HEAD MODULE

EXPOSURE CONTROL SIGNAL

55

SPEED CONTROL PULSE

DRIVE CONTROL SIGNAL

MOTOR DRIVER

12

STEPPING MOTOR

EP 1 056 271 B1